# EUROPEAN PATENT SPECIFICATION

(11) **EP 4 270 187 B1**
(45) Date of publication and mention of the grant of the patent: **25.06.2025**
(21) Application number: 22745204.2
(22) Date of filing: 25.01.2022
(51) Int. Cl.: G06F 9/451, G06F 16/957, G06F 16/958

(54) **WORK DISPLAY METHOD AND APPARATUS, AND ELECTRONIC DEVICE AND STORAGE MEDIUM**
ARBEITSANZEIGEVERFAHREN UND -VORRICHTUNG SOWIE ELEKTRONISCHE VORRICHTUNG UND SPEICHERMEDIUM
PROCÉDÉ ET APPAREIL D'AFFICHAGE DE TRAVAIL, AINSI QUE DISPOSITIF ÉLECTRONIQUE ET SUPPORT DE STOCKAGE

(30) Priority: 27.01.2021 CN 202110113819
(43) Date of publication of application: 01.11.2023
(73) Proprietor: Beijing Zitiao Network Technology Co., Ltd., Beijing 100190 (CN)
(72) Inventor: WU, Yiying, Beijing 100190 (CN); SUN, Hui, Beijing 100190 (CN); BAI, Xiaoshuang, Beijing 100190 (CN)
(74) Representative: Dentons UK and Middle East LLP
(86) International application number: PCT/CN2022/073618
(87) International publication number: WO 2022/161329

(56) References cited:
- CN-A- 107 145 513
- CN-A- 107 145 513
- CN-A- 111 246 275
- CN-A- 112 953 814
- US-A1- 2010 064 040
- US-A1- 2013 004 138
- US-A1- 2020 027 172
- ANONYMOUS: "How to view the visitor list in WeChat video updates - Baidu Experience", 20 July 2019 (2019-07-20), XP093159506, Retrieved from the Internet <URL:https://jingyan.baidu.com/article/c74d60003ba4914f6a595d9a.html> [retrieved on 20240506]
- ANONYMOUS: "How to See Visitors on Your WeChat Video Status", 1 January 2019 (2019-01-01), XP055953685, Retrieved from the Internet <URL:https://jingyan.baidu.com/article/fec7a1e5af9ff31191b4e74e.html> [retrieved on 20220822]
- JIAN KE WANG: "How to Know Who Has Viewed My Work on TikTok", JIANDIAO VIDEO, CN, CN, pages 1 - 7, XP009541208, Retrieved from the Internet <URL:https://mkeji.jiandiao.com/69019.html?ivk_sa=1024609v> [retrieved on 20221209]
- ANONYMOUS: "How to See Visitors on Your WeChat Video Status", 1 January 2019 (2019-01-01), XP055953685, Retrieved from the Internet <URL:https://jingyan.baidu.com/article/fec7a1e5af9ff31191b4e74e.html >
- YUN QI SHI: "Can We See Visitor Records on TikTok Snapshot?", CLOUD KNIGHT, 26 July 2019 (2019-07-26), XP055957640, Retrieved from the Internet <URL:https://www.yunqishi.net/video/30243.html>

## Description

### TECHNICAL FIELD

The present disclosure relates to the field of computer technologies, for example, a work display method and apparatus, an electronic device and a storage medium.

### BACKGROUND

A user can publish works on a platform or view the works published by other users.

In the related art, after a user publishes a work, the user cannot view the browsing history of the published work, or the user needs to go through a long operation path to view the browsing history of the published work, making the operation cumbersome and causing a poor user experience. Further relevant technologies are known from US 2020/027172 A1 providing a data processing system for managing activities linked to multimedia content, Anonymous "How to view the visitor list in WeChat video updates - Baidu Experience", 20 July 2019 (2019-07-20), URL:https://jingyan.baidu.com/article/c74d60003ba4914f6a595d9a.html, & Anonymous: "How to See Visitors on Your WeChat Video Status", 1 January 2019 (2019-01-01), URL:https:// jingyan.baidu.com/article/fec7ale5af9ff31191b4e74e.html, US 2010/064040 A1 providing content recommendations based on browsing information, and CN 107 145 513 A providing an information display method and apparatus, and a terminal.

### SUMMARY

The invention is set out in the appended set of claims.

### BRIEF DESCRIPTION OF DRAWINGS

FIG. 1 is a flowchart of a work display method according to an embodiment of the present disclosure;
FIG. 2 is a flowchart of another work display method according to an embodiment of the present disclosure;
FIG. 3 is a schematic diagram of a work display page according to an embodiment of the present disclosure;
FIG. 4 is a block diagram of a work display apparatus according to an embodiment of the present disclosure; and
FIG. 5 is a structure diagram of an electronic device according to an embodiment of the present disclosure.

### DETAILED DESCRIPTION

Embodiments of the present disclosure will be described below with reference to the drawings. The drawings illustrate some embodiments of the present disclosure, but the present disclosure may be implemented in various manners and is not to be limited to the embodiments set forth herein. The drawings and embodiments of the present disclosure are for illustrative purposes and are not intended to limit the scope of the present disclosure.

As used herein, the term "include" and variations thereof are intended to be open-ended terms, that is, "including, but not limited to". The term "based on" is "at least partially based on". The term "an embodiment" refers to "at least one embodiment"; the term "another embodiment" refers to "at least one another embodiment"; the term "some embodiments" refers to "at least some embodiments". Related definitions of other terms are given in the description hereinafter.

Concepts such as "first" and "second" in the present disclosure are intended to distinguish between various apparatuses, modules or units and are not intended to limit the order or interrelationship of the functions performed by such apparatuses, modules or units.

"One" and "a plurality" mentioned in the present disclosure are intended to be illustrative and not restrictive, and should be understood as "one or more" unless stated in the context.

The names of messages or information exchanged between multiple apparatuses in embodiments of the present disclosure are for illustrative purposes and are not intended to limit the scope of such messages or information.

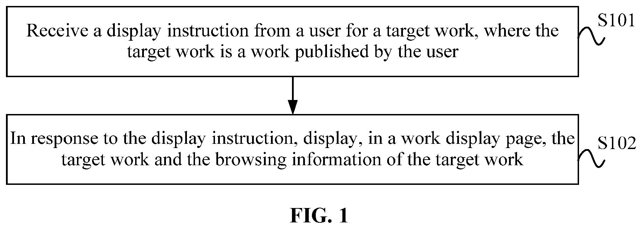

FIG. 1 is a flowchart of a work display method according to an embodiment of the present disclosure. The method may be performed by a work display apparatus. The apparatus may be implemented in hardware and/or software, may be configured in an electronic device and may be configured in a mobile phone or a tablet computer. The work display method provided by this embodiment of the present disclosure is applicable to the scenario of displaying the work published by a user to the user. As shown in FIG. 1, the work display method provided by this embodiment of the present disclosure includes steps S101 and S102.

In S101, a display instruction is received from a user for a target work, where the target work is a work published by the user.

The display instruction may be an instruction of the user to instruct the electronic device to display a work published by the user. The target work is a work corresponding to the display instruction. The target work may be a work published by a user and may be any type of work published by a user, such as a video, a file (including an article, etc.), and an image-based or text-based trend. The target work is not limited to this embodiment. The following is described using an example where the target work is a video published by a user.

In this embodiment, after the user publishes a work, the user can view the published work and the browsing information of the published work. For example, when the user wants to view the work content and/or the browsing information of a work (that is, the target work) published by the user himself or herself, the user can instruct the electronic device to generate a display instruction for the work through a corresponding trigger operation. Accordingly, when monitoring the corresponding trigger operation of the user, the electronic device may determine the work corresponding to the trigger operation as the target work and determine that the display instruction of the user for the target work is received.

In S102, in response to the display instruction, the target work and the browsing information of the target work are displayed in a work display page.

The browsing information of the target work may be a browsing history of the target work by other users who have given the browsing history authorization and follow the user. The browsing information of the target work may include identification information of a user who has browsed the target work and may also include information such as the browsing time when the user browsed the target work. In this embodiment, a user may be prompted to give authorization by means of a pop-up window. For example, a prompt pop-up window is displayed, and the user is prompted in the pop-up window whether to allow the user (referred to as the followed user) followed by the user to view the identification information of the user in the browsing history of a work published by the followed user. In this manner, when the user clicks to the authorization giving control in the prompt pop-up window, that is, when the user gives the browsing history authorization, the followed user can view the user identification information of the user in the browsing information of the work after the user browses the work of the followed user. When the user clicks the authorization rejecting control in the prompt pop-up window, that is, when the user does not give the browsing history authorization, after the user browses a work, the publisher of the work cannot view the user identification information of the user in the browsing history of the work. For example, it is assumed that the user A follows the user B and the user A browses a work published by the user B. If the user A gives the browsing history authorization, the user B can know that the user A browses the work based on the browsing information of the work. If the user A does not give the browsing history authorization, the user B cannot know whether the user A browses the work.

In this embodiment, when the target work published by the user is displayed to the user, the browsing information of the target work can be displayed to the user as a part of the information of the target work so that the user can view the browsing information of the work published by the user by other users while viewing the work published by the user. In this manner, the user can not only conveniently and quickly view the browsing history of the work published by the user, but also know that lots of users have browsed the work published by the user, creating an atmosphere in which the work published by the user is not monotonous and the user is surrounded by the concern from other users and improving the creative enthusiasm of the user.

When the electronic device receives the display instruction of the user for the target work, the electronic device displays the work content of the target work and the browsing information of the target work in the work display page according to a preset display mode. For example, the electronic device displays the work content of the target work in a work region of the work display page and displays the browsing history of the target work in a target region of the work display page.

The work region may be understood as a region in the work display page for displaying the work content of the target work, and the target region may be understood as a region in the work display page for displaying the browsing information of the target work. The target region may or may not overlap with the work region, that is, the target region and the work region may be different regions in the work display page, or the target region may be a region located in the work region. The electronic device may display the work content of the target work and the browsing history of the target work in different regions of the work display page or may display the browsing history of the target work on an upper layer of the work content of the target work, which is not limited to this embodiment.

The following is described using an example where the target work is a target video published by a user. The electronic device may generate the display instruction when the electronic device receives a trigger operation for instructing the electronic device to play the target video in any scenario (for example, a scenario for browsing videos published by local users, a scenario for browsing videos published by followed users and/or a scenario for browsing videos recommended by the server). The electronic device may also generate the display instruction only when the electronic device receives a trigger operation for instructing the electronic device to play the target video in certain scenarios (for example, a scenario for only browsing the video published by the user). In this manner, the work display page may include a video playback page in any scenario or may include a video playback page in some of the above-mentioned scenarios, such as a page for playing the work published by the user. When the electronic device receives any trigger operation for displaying a video, the electronic device may determine whether the video corresponding to the trigger operation is the target video published by the user without considering the scenario in which the user performs a trigger operation for displaying the video, and when the electronic device determines that the video corresponding to the trigger operation is the target video published by the user, the electronic device may display the video and the browsing information of the video in the page corresponding to the trigger operation. The scenario in which the user performs a trigger operation for displaying a video may also be considered, and the electronic device displays the target video and the browsing history of the target video only when the electronic device receives a trigger operation only for displaying the target video published by the user.

Given the intention of the user to display the video, to avoid disturbance caused to the user to browse videos due to the excessive information displayed when the user browses the videos published in the platform, in an embodiment, the display instruction is generated only in a scenario in which the user views the video published by the user himself or herself, and the video to be viewed by the user and the browsing information of the video are displayed in response to the display instruction.

In an embodiment, the target work is a target video published by the user, and the step where the target work is displayed in the work display page includes the following step: the target video is played in the work display page; or a video cover of the target video is displayed in the work display page, and in response to receiving a click operation acting on the video cover, the target video is played.

The video cover of the target video may be one video frame of the target video, such as the first video frame of the target video, or may be another picture set by the user.

In the embodiments described above, when the target work is a target video published by the user, when the electronic device displays the target work in the work display page, the target video may be automatically played so that the user can directly view the video after the work display page is displayed, thereby reducing the trigger operations performed by the user. Only the video cover of the target video may be displayed without playing the target video, and the target video is played when a corresponding trigger operation of the user for playing the target video is received (for example, an operation of clicking the video cover of the target video), thereby avoiding disturbance caused to the user due to the automatic playing of the target video when the user does not want to view the work content of the target work, for example, when the user only wants to view the browsing information or other information of the target work (for example, comment information, like information or repost information).

For example, the electronic device may play the target video and the browsing information of the target video in the work display page in response to the display instruction received by the electronic device. The electronic device may also display the video cover and the browsing information of the target video in the work display page in response to the display instruction received by the electronic device, and when the user wants to view the target video, the user may click the video cover of the target video. Accordingly, when the electronic device monitors that the user clicks the video cover of the target video, the electronic device may play the target video in the work display page and continue or stop displaying the browsing information of the target video. Alternatively, the electronic device displays the video cover of the target video in the work display page in response to the received display instruction, and when the user wants to view the target video or the browsing information of the target video, the user may click the video cover of the target video. Accordingly, when the electronic device monitors that the user clicks the video cover of the target video, the electronic device may play the target video and the browsing information of the target video in the work display page.

In the work display method provided by this embodiment, a display instruction is received from a user for a target work, and in response to the display instruction, the target work and the browsing information of the target work are displayed in a work display page. Through the above-mentioned solution in this embodiment, the browsing information of the work published by the user is displayed while the work published by the user is displayed. Therefore, the viewing path of the browsing information of the work can be shortened, and the operations to be performed by the user for viewing the browsing information of the work published by the user can be reduced, thereby improving the user experience. In addition, the user can know the browsing situation of the work by other users when the user views the work published by the user, thereby improving the creative enthusiasm of the user.

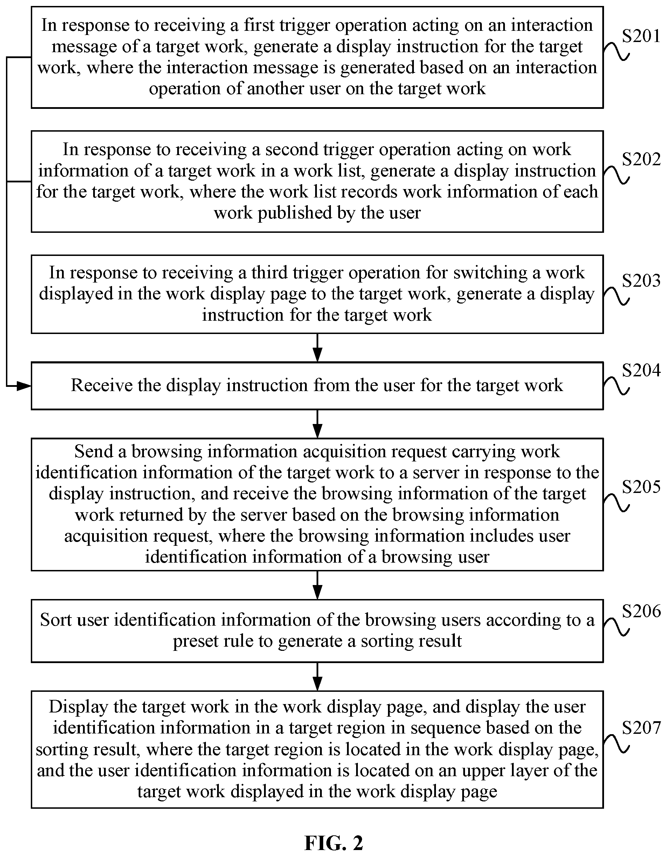

FIG. 2 is a flowchart of another work display method according to an embodiment of the present disclosure. The solution in this embodiment may be combined with one or more optional solutions in the embodiments described above. The browsing information includes the user identification information of browsing users, and the step where the browsing information of the target work is displayed in the work display page includes the following steps: the user identification information of the browsing users is sorted according to a preset rule to generate a sorting result; and the user identification information is displayed in a target region in sequence based on the sorting result, where the target region is located in the work display page, and the user identification information is located on an upper layer of the target work displayed in the work display page.

Optionally, before the display instruction is received from the user for the target work, the method further includes at least one of the following steps: in response to receiving a first trigger operation acting on an interaction message of the target work, the display instruction for the target work is generated, where the interaction message is generated based on an interaction operation of another user on the target work; in response to receiving a second trigger operation acting on work information of a target work in a work list, the display instruction for the target work is generated, where the work list records work information of each work published by the user; or in response to receiving a third trigger operation for switching a work displayed in the work display page to the target work, the display instruction for the target work is generated. Optionally, before the target work and the browsing information of the target work are displayed in the work display page, the method further includes the following steps: a browsing information acquisition request carrying work identification information of the target work is sent to a server, and the browsing information of the target work returned by the server based on the browsing information acquisition request is received.

As shown in FIG. 2, the work display method provided by this embodiment includes steps S201 to S207.

In S201, in response to receiving a first trigger operation acting on an interaction message of a target work, a display instruction for the target work is generated, where the interaction message is generated based on an interaction operation of another user on the target work, and S204 is then performed.

The interaction operation of another user on the target work may include operations of another user, such as giving a like, posting comments, favoriting and/or sharing, on the target work. The interaction message may be a reminder message indicating that another user interacts with the work, such as a like reminder message, a comment reminder message, a favoriting reminder message and/or a sharing reminder message of the work published by the user. The interaction message may be generated by a server or a client of another user performing the interaction operation and sent to the publisher of the work. The first trigger operation may be an operation of triggering the interaction message of one work published by the user, such as an operation of clicking the interaction message.

In this embodiment, the user may instruct the electronic device to display the work display page by triggering the interaction message received by the user and display the target work corresponding to the interaction message and the browsing history of the target work in the work display page.

The electronic device receives an interaction message sent by a server or another client and displays the interaction message in a corresponding page (such as a message page), and when the user wants to view the target work corresponding to the interaction message, the browsing information of the target work and/or the interaction situation (such as the number of interactions) of the target work, the user may click the interaction message displayed in the corresponding page. Accordingly, when the electronic device monitors a click operation acting on the interaction message of one work, the electronic device determines that a first trigger operation is received, takes the work as the target work, and generates a display instruction for the target work to perform subsequent operations in response to the display instruction.

In S202, in response to receiving a second trigger operation acting on work information of a target work in a work list, a display instruction for the target work is generated, where the work list records work information of each work published by the user, and S204 is then performed.

The work list may be a list of works published by the user, and the work list may record the work information of each work published by the user, such as a work cover and/or a work name of each work published by the user. The second trigger operation may be an operation of triggering work information of any work in the work list, such as an operation of clicking one work information in the work list.

In this embodiment, the user may instruct the electronic device to display the work display page by triggering the work information in the work list and display the target work corresponding to the work information and the browsing history of the target work in the work display page.

The electronic device displays the work list of the user based on a trigger operation of the user for displaying the work list and displays the work information of each work published by the user in the work list, and when the user wants to view one work and/or the browsing information of one work, the user may click the work information of the work. Accordingly, when the electronic device monitors a click operation acting on the work information of one work, the electronic device determines that a second trigger operation is received, takes the work as the target work, and generates a display instruction for the target work to perform subsequent operations in response to the display instruction.

In S203, in response to receiving a third trigger operation for switching a work displayed in the work display page to the target work, a display instruction for the target work is generated.

The work display page may be understood as a page for displaying the work published by the user. The third trigger operation may be a switching operation for switching the work displayed in the work display page, such as a sliding operation in the work display page. The sliding operation may be an up-or-down sliding operation (that is, a sliding operation in which the sliding direction is up or down) or a left-or-right sliding operation (that is, a sliding operation in which the sliding direction is left or right). The following is described using an example where the third trigger operation is an up-or-down sliding operation.

In this embodiment, the user may instruct the electronic device to display other works published by the user and the browsing information of other works by switching the work displayed in the work display page.

The electronic device displays a work display page and displays one work published by the user and the browsing information of the work in the work display page, and when the user wants to switch the work and the browse information displayed in the work display page, the user may perform an up-or-down sliding operation. Accordingly, when the electronic device monitors the up-or-down sliding operation of the user, the electronic device may determine that a third trigger operation is received, determines the previous work/next work corresponding to the up-or-down sliding operation as the target work according to the arrangement order of each work published by the user, and generates a work display instruction for the target work.

In S204, the display instruction is received from the user for the target work, where the target work is a work published by the user.

In S205, a browsing information acquisition request carrying work identification information of the target work is sent to a server in response to the display instruction, and the browsing information of the target work returned by the server based on the browsing information acquisition request is received, where the browsing information includes the user identification information of browsing users.

The browsing user of the target work is understood as a user who browses the target work.

The user identification information may be understood as identification information of a user, such as an avatar, a user name and/or an identifier (ID) of the user. The following is described using an example where the user identification information is an avatar of the user. The work identification information may be understood as identification information of a work, such as a work ID. The browsing information acquisition request may be used for requesting the server to acquire the browsing information of the target work, for example, for requesting the server to acquire the identification information of the browsing user of the target work.

When the electronic device receives the display instruction for the target work, the electronic device generates a browsing information acquisition request carrying the work identification information of the target work and sends the browsing information acquisition request to the server. Accordingly, after the server receives one browsing information acquisition request sent by the electronic device, the server may search for the browsing information of the target work based on the work identification information of the target work carried in the browsing information acquisition request and send the browsing information of the target work to the electronic device which sends the browsing information acquisition request so that the electronic device may receive the browsing information of the target work sent by the server.

In addition, considering that the electronic device does not store the target work locally, when the electronic device receives the display instruction for the target work, the electronic device may also send a work acquisition request carrying the work identification information of the target work to the server and receive the work content of the target work returned by the server based on the work acquisition request.

When the electronic device receives the display instruction for the target work, the electronic device may also send an acquisition request to the server only once and request the target work and the browsing information of the target work from the server through the acquisition request. For example, when the electronic device receives the display instruction for the target work, the electronic device generates an acquisition request carrying the work identification information of the target work and sends the acquisition request to the server. Accordingly, after the server receives one acquisition request sent by the electronic device, the server acquires the target work and the browsing history of the target work based on the work identification information of the target work carried in the acquisition request and sends the target work and the browsing history to the electronic device so that the electronic device may receive the target work and the browsing information of the target work sent by the server.

In S206, the user identification information of the browsing users is sorted according to a preset rule to generate a sorting result.

After the electronic device acquires the user identification information of browsing users of the target user, the electronic device sorts the user identification information according to a preset rule and generates a sorting result to obtain a display order of the user identification information in the work display page. The preset rule may be flexibly set as required. The user identification information of the browsing users is sorted according to at least one of: the time when each browsing user browses the target work, the number of times each browsing user browses the target work, the length of time each browsing user browses the target work or the number of times each browsing user interacts with the target work. The preset rule is not limited to this embodiment.

In S207, the target work is displayed in the work display page, and the user identification information is displayed in a target region in sequence based on the sorting result, where the target region is located in the work display page, and the user identification information is located on an upper layer of the target work displayed in the work display page.

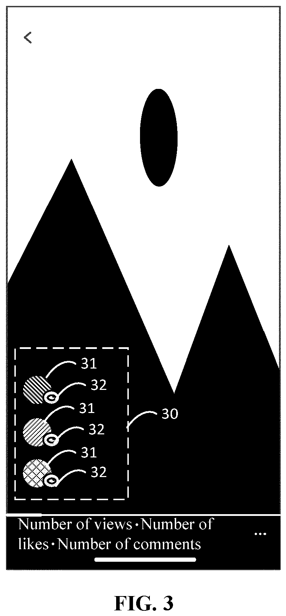

In this embodiment, as shown in FIG. 3 (FIG. 3 is illustrated using an example where the avatar of a browsing user serves as the user identification information 31 and the target region 30 is located at the lower left corner of the work display page), when the electronic device displays the target work, the electronic device may display the user identification information 31 of the browsing user of the target work on the upper layer of the target work. That is, the electronic device may display the target work in the work display page and display the user identification information 31 of each browsing user of the target work in the target region 30 located in the work display page. The target region may be any region located in the work display page, such as a region of the same size as the work display page, so that the electronic device can display the user identification information of the browsing user of the target work in the entire work display page. The target region may also be a region whose size is smaller than the size of the work display page, such as a region located at the lower left corner, the lower right corner, the upper side, the lower side or the like of the work display page. The electronic device may also display the identification information (not shown) of an interaction user who has interacted with the target work in the work display page. For example, the electronic device displays the identification information of a like-giving user, a comment-posting user, a favoriting user and/or a sharing user of the target work in the work display page. At this point, to facilitate the user to distinguish the identification information of the users who perform different operations, the electronic device may also display both the user identification information 31 of a browsing user of the target work and a browsing identification 32 so that the user knows that the user identification information 31 is the identification information of the user who has browsed the target work. In addition, information on the number of views and interactions of the target work, such as the number of views, the number of likes and/or the number of comments of the target work, may be displayed in the work display page.

The electronic device may display the user identification information of the browsing users in a target display region in sequence based on the generated sorting result. The number of pieces of user identification information displayed at a single time may be one or more. The display mode of the user identification information of each browsing user may be set as required. For example, the electronic device may display a certain number (such as three or five) of pieces of user identification information at a set spacing in the target region each time for a preset time length (such as three seconds), then stop displaying the certain number of pieces of user identification information, and start the next display. The electronic device may also control each piece of user identification information to move into the target region in sequence, control each piece of user identification information to move in the target region until the corresponding user identification information moves out of the target region, display the user identification information when one piece of user identification information is located in the target region, and stop displaying the user identification information when the user identification information is located outside the target region. The display mode is not limited to this embodiment.

In an embodiment, the step where the user identification information is displayed in the target region in sequence based on the sorting result includes the following step: each of pieces of the user identification information is dynamically displayed in the target region in sequence according to a preset speed and a preset direction based on the sorting result.

In the embodiments described above, the user identification information may be controlled to move in the target region in sequence according to a preset speed and a preset direction based on the generated sorting result to dynamically display each of pieces of the user identification information. For example, the electronic device may take the next piece of user identification information of the last displayed user identification information in the target region as the current user identification information according to the sorting result, display the current user identification information at a first boundary, control the current user identification information to move toward a second boundary of the target region according to the preset speed and the preset direction, and stop displaying the current user identification information when the current user identification information moves to the second boundary.

The current user identification information may be understood as user identification information that currently needs to be displayed at the first boundary of the target region. The time intervals between adjacent two pieces of user identification information displayed at the first boundary may be the same or different. The first boundary and the second boundary may be two boundaries of the target region, which correspond to the preset direction for dynamically displaying each piece of user identification information in the target region. For example, when the preset direction is from bottom to top, the first boundary may be a lower boundary of the target region, and the second boundary may be an upper boundary of the target region. When the preset direction is from top to bottom, the first boundary may be an upper boundary of the target region, and the second boundary may be a lower boundary of the target region. When the preset direction is from left to right, the first boundary may be a left boundary of the target region, and the second boundary may be a right boundary of the target region. When the preset direction is from right to left, the first boundary may be a right boundary of the target region, and the second boundary may be a left boundary of the target region.

In the embodiments described above, when each piece of user identification information is dynamically displayed, the speeds and/or directions where different pieces of user identification information move in the target region may be the same or different. In this embodiment, each piece of user identification information may be dynamically displayed at the same speed and in the same direction, that is, each piece of user identification information is controlled to move at the same speed and in the same direction in the target region, to avoid the occurrence of occlusion between user identification information with different speeds and/or different directions in the moving process, thereby facilitating the user to view each piece of user identification information. At this point, each piece of user identification information is displayed at the same speed and in the same direction in the target region.

In the work display method provided by this embodiment, the browsing information of the work published by the user is displayed only when the work published by the user is displayed in a scenario of displaying the work published by the user, and when the browsing information is displayed, the browsing information is controlled to move on an upper layer of the displayed work. In this manner, the user can be prevented from being disturbed by excessive information displayed when the user browses the work, and the user can also view the browsing information of the work coherently, thereby improving the user experience.

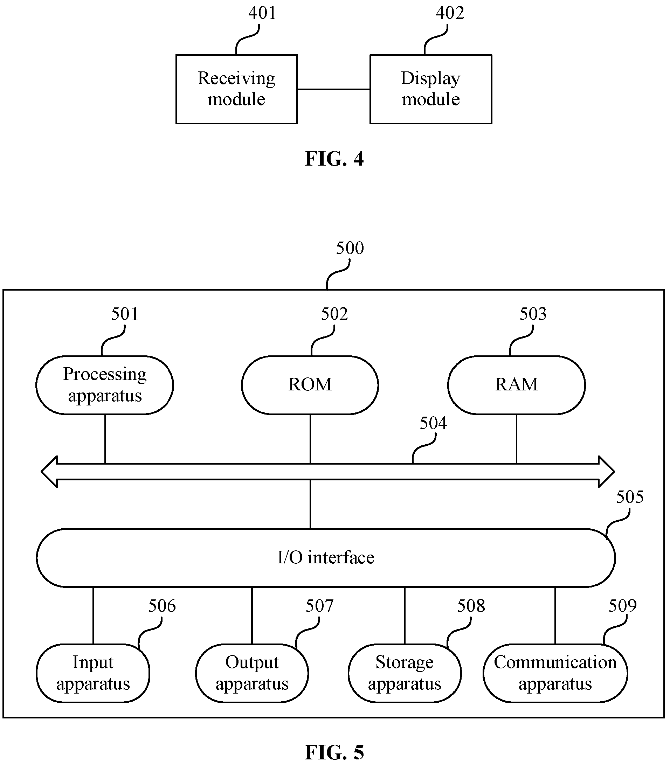

FIG. 4 is a block diagram of a work display apparatus according to an embodiment of the present disclosure. The apparatus may be implemented in hardware and/or software, may be configured in an electronic device, may be configured in a mobile phone or a tablet computer, and may display a work published by a user and the browsing information of the work by performing a work display method. As shown in FIG. 4, the work display apparatus provided by this embodiment includes a receiving module 401 and a display module 402.

The receiving module 401 is configured to receive a display instruction from a user for a target work, where the target work is a work published by the user.

The display module 402 is configured to, in response to the display instruction, display, in a work display page, the target work and the browsing information of the target work.

In the work display apparatus provided by this embodiment, the receiving module 401 receives a display instruction from a user for a target work, and the display module 402 displays the target work and the browsing information of the target work in a work display page in response to the display instruction. Through the above-mentioned solution in this embodiment, the browsing information of the work published by the user is displayed while the work published by the user is displayed. Therefore, the viewing path of the browsing information of the work can be shortened, and the operations to be performed by the user for viewing the browsing information of the work published by the user can be reduced, thereby improving the user experience. In addition, the user can know the browsing situation of the work by other users when the user views the work published by the user, thereby improving the creative enthusiasm of the user.

In the above-mentioned solution, the browsing information may include the user identification information of a browsing user, and the display module 402 may include a sorting unit and an information display unit. The sorting unit is configured to sort the user identification information of the browsing users according to a preset rule to generate a sorting result. The information display unit is configured to display, in a target region, the user identification information in sequence based on the sorting result, where the target region is located in the work display page, and the user identification information is located on an upper layer of the target work displayed in the work display page.

In the above-mentioned solution, the information display unit may be configured to dynamically display, in the target region, the user identification information in sequence according to a preset speed and a preset direction based on the sorting result.

In the above-mentioned solution, each of pieces of the user identification information is displayed at the same speed and in the same direction in the target region.

In the above-mentioned solution, the target work may be a target video published by the user, and the display module 402 may include a work display unit. The work display unit is configured to play the target video in the work display page; or display a video cover of the target video in the work display page and in response to receiving a click operation acting on the video cover, play the target video.

The work display apparatus provided by this embodiment may further include an instruction generation module. The instruction generation module is configured to, before the display instruction is received from the user for the target work, execute at least one of the following operations: in response to receiving a first trigger operation acting on an interaction message of the target work, generate the display instruction for the target work, where the interaction message is generated based on an interaction operation of another user on the target work; in response to receiving a second trigger operation acting on work information of a target work in a work list, generate the display instruction for the target work, where the work list records work information of each work published by the user; or in response to receiving a third trigger operation for switching a work displayed in the work display page to the target work, generate the display instruction for the target work.

In the above-mentioned solution, the display module 402 may further be configured to, before the target work and the browsing information of the target work are displayed in the work display page, send a browsing information acquisition request carrying work identification information of the target work to a server and receive the browsing information of the target work returned by the server based on the browsing information acquisition request.

The work display apparatus provided by this embodiment of the present disclosure may execute the work display method provided by any embodiment of the present disclosure and has corresponding functional modules and effects for executing the work display method. For technical details not described in detail in this embodiment, reference may be made to the work display method provided by any embodiment of the present disclosure.

Referring to FIG. 5, FIG. 5 shows a structure diagram of an electronic device 500 (such as a terminal device) applicable to implementing the embodiments of the present disclosure. The electronic device in this embodiment of the present disclosure may include mobile terminals such as a mobile phone, a laptop, a digital broadcast receiver, a personal digital assistant (PDA), a portable Android device (PAD), a portable media player (PMP) and a vehicle-mounted terminal (such as a vehicle-mounted navigation terminal), and fixed terminals such as a digital television (TV) and a desktop computer. The electronic device shown in FIG. 5 is an example and is not intended to limit the function and usage scope of the embodiments of the present disclosure.

As shown in FIG. 5, the electronic device 500 may include a processing apparatus 501 (such as a central processing unit and a graphics processing unit). The processing apparatus 501 may perform various suitable actions and processing according to a program stored in a read-only memory (ROM) 502 or a program loaded into a random-access memory (RAM) 503 from a storage apparatus 508. Various programs and data required for the operation of the electronic device 500 are also stored in the RAM 503. The processing apparatus 501, the ROM 502, and the RAM 503 are connected to each other via a bus 504. An input/output (I/O) interface 505 is also connected to the bus 504.

Generally, the following apparatuses may be connected to the I/O interface 505: an input apparatus 506 such as a touch screen, a touchpad, a keyboard, a mouse, a camera, a microphone, an accelerometer, and a gyroscope; an output apparatus 507 such as a liquid-crystal display (LCD), a speaker, and a vibrator; the storage apparatus 508 such as a magnetic tape and a hard disk; and a communication apparatus 509. The communication apparatus 509 may allow the electronic device 500 to perform wireless or wired communication with other devices to exchange data. Although FIG. 5 shows the electronic device 500 having various apparatuses, not all of the apparatuses shown herein need to be implemented or presented. More or fewer apparatuses may be implemented or presented instead.

According to the embodiments of the present disclosure, the process described above with reference to the flowchart may be implemented as a computer software program. For example, the embodiments of the present disclosure provides a computer program product. The computer program product includes a computer program carried in a non-transitory computer-readable medium. The computer program includes program codes for executing the method shown in the flowchart. In such embodiments, the computer program may be downloaded and installed from a network through the communication apparatus 509, may be installed from the storage apparatus 508, or may be installed from the ROM 502. When the computer program is executed by the processing apparatus 501, the preceding functions defined in the method provided by the embodiments of the present disclosure are executed.

The computer-readable medium described above in the present disclosure may be a computer-readable signal medium, a computer-readable storage medium, or any combination thereof. The computer-readable storage medium, for example, may be an electronic, magnetic, optical, electromagnetic, infrared or semiconductor system, apparatus or device, or any suitable combination thereof. The storage medium may be a non-transitory storage medium. The computer-readable storage medium may include: an electrical connection having one or more wires, a portable computer disk, a hard disk, a RAM, a ROM, an erasable programmable read-only memory (EPROM), a flash memory, an optical fiber, a portable compact disc read-only memory (CD-ROM), an optical storage device, a magnetic storage device, or any suitable combination thereof. In the present disclosure, the computer-readable storage medium may be any tangible medium that can contain, or store a program for use by or in connection with an instruction execution system, apparatus, or device. In the present disclosure, the computer-readable signal medium may include a propagated data signal with computer-readable program code embodied therein, for example, in baseband or as part of a carrier wave. This propagated data signal may take a plurality of forms including an electromagnetic signal, an optical signal, or any suitable combination thereof. The computer-readable signal medium may be any computer-readable medium that is not a computer-readable storage medium and that can communicate, propagate, or transport a program for use by or in connection with an instruction execution system, apparatus, or device. The program codes included on the computer-readable medium may be transmitted via any suitable medium which includes a wire, an optical cable, a radio frequency (RF), or any suitable combination thereof.

In some embodiments, clients and servers may communicate using any currently known network protocol such as HyperText Transfer Protocol (HTTP) or any network protocol to be developed in the future, and may be interconnected with any form or medium of digital data communication (such as a communication network). Examples of the communication network include a local area network (LAN), a wide area network (WAN), an internet (such as the Internet), and a peer-to-peer network (such as an ad hoc network), as well as any network currently known or to be developed in the future.

The computer-readable medium may be included in the electronic device or may exist alone without being assembled into the electronic device.

The computer-readable medium carries one or more programs, where the one or more programs, when executed by the electronic device, cause the electronic device to perform the following operations: a display instruction is received from a user for a target work, where the target work is a work published by the user; and in response to the display instruction, the target work and the browsing information of the target work are displayed in a work display page.

Computer program codes for performing the operations in the present disclosure may be written in one or more programming languages or combinations thereof. The preceding one or more programming languages include object-oriented programming languages such as Java, Smalltalk and C++, and further include conventional procedural programming languages such as C or similar programming languages. Program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any kind of network including a LAN or a WAN, or may be connected to an external computer (for example, via the Internet through an Internet service provider).

The flowcharts and block diagrams in the drawings show possible architectures, functions and operations of the system, method and computer program product according to various embodiments of the present disclosure. In this regard, each block in the flowcharts or block diagrams may represent a module, a program segment, or part of codes that contains one or more executable instructions for implementing specified logical functions. In some alternative implementations, the functions marked in the blocks may occur in an order different from those marked in the drawings. For example, two blocks shown in succession may, in fact, be executed substantially concurrently, or the blocks may sometimes be executed in the reverse order, depending upon the functionality involved. Each block in the block diagrams and/or flowcharts and combinations of blocks in the block diagrams and/or flowcharts may be implemented by special-purpose hardware-based systems that perform the specified functions or operations, or combinations of special-purpose hardware and computer instructions.

The units involved in the embodiments of the present disclosure may be implemented by software or hardware. The name of a module is not intended to limit the module in certain circumstances.

The functions described above herein may be executed, at least partially, by one or more hardware logic components. For example, exemplary types of hardware logic components that can be used include: a field-programmable gate array (FPGA), an application-specific integrated circuit (ASIC), application-specific standard parts (ASSP), a system on a chip (SOC), a complex programmable logic device (CPLD) and the like.

In the context of the present disclosure, the machine-readable medium may be a tangible medium that may include or store a program for use by or in connection with an instruction execution system, apparatus, or device. The machine-readable medium may be a machine-readable signal medium or a machine-readable storage medium. The machine-readable medium may include an electronic, magnetic, optical, electromagnetic, infrared or semiconductor system, apparatus or device, or any suitable combination thereof. The machine-readable storage medium includes an electrical connection based on one or more wires, a portable computer disk, a hard disk, a RAM, a ROM, an EPROM, a flash memory, an optical fiber, a portable CD-ROM, an optical storage device, a magnetic storage device, or any suitable combination thereof.

## Claims

1. A work display method, applied to an electronic device (500), comprising:
receiving (S101, S204) a display instruction from a user for a target work, wherein the target work is a work published by the user; and
in response to the display instruction, displaying (S 102), in a work display page, the target work and browsing information of the target work;
wherein displaying (S 102), in the work display page, the browsing information of the target work comprises:
sorting (S206) user identification information of browsing users according to a preset rule to generate a sorting result, wherein the browsing users are users who browse the target work; and
displaying (S207), in a target region, the user identification information in sequence based on the sorting result, wherein the target region is located in the work display page, and the user identification information is located on an upper layer of the target work displayed in the work display page; and **characterized in that**:
sorting the user identification information of the browsing users according to the preset rule comprises: sorting the user identification information of the browsing users according to at least one of: a number of times each browsing user of the browsing users browses the target work, a length of time each browsing user of the browsing users browses the target work, or a number of times each browsing user of the browsing users interacts with the target work.

2. The method of claim 1, wherein displaying (S207), in the target region, the user identification information in sequence based on the sorting result comprises:
dynamically displaying, in the target region, the user identification information in sequence according to a preset speed and a preset direction based on the sorting result.

3. The method of claim 2, wherein each of pieces of the user identification information is displayed at a same speed and in a same direction in the target region.

4. The method of any one of claims 1 to 3, wherein the target work is a target video published by the user, and displaying, in the work display page, the target work comprises:
playing the target video in the work display page; or
displaying a video cover of the target video in the work display page, and in response to receiving a click operation acting on the video cover, playing the target video.

5. The method of any one of claims 1 to 3, before receiving the display instruction from the user for the target work, further comprising at least one of:
in response to receiving a first trigger operation from the user acting on an interaction message of the target work, generating (S201) the display instruction for the target work, wherein the interaction message is generated based on an interaction operation of a user other than the user on the target work;
in response to receiving a second trigger operation from the user acting on work information of a target work in a work list, generating (S202) the display instruction for the target work, wherein the work list records work information of each work published by the user; or
in response to receiving a third trigger operation from the user for switching a work displayed in the work display page to the target work, generating (S203) the display instruction for the target work.

6. The method of any one of claims 1 to 3, before displaying, in the work display page, the target work and the browsing information of the target work, further comprising:
sending (S205) a browsing information acquisition request carrying work identification information of the target work to a server, and receiving the browsing information of the target work returned by the server based on the browsing information acquisition request.

7. An electronic device (500), comprising:
at least one processor; and
a memory configured to store at least one program;
wherein the at least one program, when executed by the at least one processor, causes the at least one processor to perform the work display method of any one of claims 1 to 6.

8. A computer-readable storage medium, which stores a computer program, wherein the computer program, when executed by a processor, performs the work display method of any one of claims 1 to 6.

## Patentansprüche

1. Arbeitsanzeigeverfahren, das auf einer elektronische Vorrichtung (500) eingesetzt wird, umfassend:
Empfangen (S101, S204) einer Anzeigeanweisung von einem Benutzer für eine Zielarbeit, wobei die Zielarbeit eine von dem Benutzer veröffentlichte Arbeit ist; und
infolge der Anzeigeanweisung, Anzeigen (S102), auf einer Arbeitsanzeigeseite, der Zielarbeit und von Durchsuchungsinformationen der Zielarbeit;
wobei Anzeigen (S102), auf der Arbeitsanzeigeseite, der Durchsuchungsinformationen der Zielarbeit Folgendes umfasst:
Sortieren (S206) von Benutzeridentifikationsinformationen von durchsuchenden Benutzern gemäß einer vorgegebenen Regel, um ein Sortierergebnis zu erzeugen, wobei die durchsuchenden Benutzer Benutzer sind, die die Zielarbeit durchsuchen; und
Anzeigen (S207), in einem Zielbereich, der Benutzeridentifikationsinformationen nacheinander, basierend auf dem Sortierergebnis, wobei sich der Zielbereich auf der Arbeitsanzeigeseite befindet und sich die Benutzeridentifikationsinformationen auf einer oberen Ebene der Zielarbeit befinden, die auf der Arbeitsanzeigeseite angezeigt wird; und **dadurch gekennzeichnet, dass**:
Sortieren der Benutzeridentifikationsinformationen der durchsuchenden Benutzer gemäß der vorgegebenen Regel umfasst: Sortieren der Benutzeridentifikationsinformationen der durchsuchenden Benutzer gemäß mindestens einem des Folgenden: einer Häufigkeit, mit der jeder durchsuchende Benutzer der durchsuchenden Benutzer die Zielarbeit durchsucht, einer Dauer, mit der jeder durchsuchende Benutzer der durchsuchenden Benutzer die Zielarbeit durchsucht, oder einer Häufigkeit, mit der jeder durchsuchende Benutzer der durchsuchenden Benutzer mit der Zielarbeit interagiert.

2. Verfahren nach Anspruch 1, wobei Anzeigen (S207), in dem Zielbereich, der Benutzeridentifikationsinformationen nacheinander, basierend auf dem Sortierergebnis, Folgendes umfasst:
dynamisches Anzeigen, in dem Zielbereich, der Benutzeridentifikationsinformationen nacheinander, gemäß einer vorgegebenen Geschwindigkeit und einer vorgegebenen Richtung, basierend auf dem Sortierergebnis.

3. Verfahren nach Anspruch 2, wobei alle der Benutzeridentifikationsinformationen mit einer gleichen Geschwindigkeit und in einer gleichen Richtung in dem Zielbereich angezeigt werden.

4. Verfahren nach einem der Ansprüche 1 bis 3, wobei die Zielarbeit ein von dem Benutzer veröffentlichtes Zielvideo ist, und Anzeigen, auf der Arbeitsanzeigeseite, der Zielarbeit, Folgendes umfasst:
Abspielen des Zielvideos auf der Arbeitsanzeigeseite; oder
Anzeigen eines Videocovers des Zielvideos auf der Arbeitsanzeigeseite, und infolgedessen, dass eine auf das Videocover getätigte Klickoperation empfangen wird, Abspielen des Zielvideos.

5. Verfahren nach einem der Ansprüche 1 bis 3, das vor Empfangen der Anzeigeanweisung von dem Benutzer für die Zielarbeit weiter mindestens eines des Folgenden umfasst:
infolgedessen, dass eine erste Auslöseoperation von dem Benutzer empfangen wird, die auf eine Interaktionsnachricht der Zielarbeit getätigt wird, Erzeugen (S201) der Anzeigeanweisung für die Zielarbeit, wobei die Interaktionsnachricht basierend auf einer Interaktionsoperation eines anderen Benutzers als dem Benutzer an der Zielarbeit erzeugt wird;
infolgedessen, dass eine zweite Auslöseoperation von dem Benutzer empfangen wird, die auf Arbeitsinformationen einer Zielarbeit in einer Arbeitsliste getätigt wird, Erzeugen (S202) der Anzeigeanweisung für die Zielarbeit, wobei die Arbeitsliste Arbeitsinformationen zu jeder von dem Benutzer veröffentlichten Arbeit aufzeichnet; oder
infolgedessen, dass eine dritte Auslöseoperation von dem Benutzer zum Umschalten einer auf der Arbeitsanzeigeseite angezeigten Arbeit auf die Zielarbeit empfangen wird, Erzeugen (S203) der Anzeigeanweisung für die Zielarbeit.

6. Verfahren nach einem der Ansprüche 1 bis 3, das vor Anzeigen, auf der Arbeitsanzeigeseite, der Zielarbeit und der Durchsuchungsinformationen der Zielarbeit, weiter Folgendes umfasst:
Senden (S205) einer Abrufanforderung von Durchsuchungsinformationen, die Arbeitsidentifizierungsinformationen der Zielarbeit enthalten, an einen Server, und Empfangen der von dem Server zurückgegebenen Durchsuchungsinformationen der Zielarbeit, basierend auf der Abrufanforderung von Durchsuchungsinformationen.

7. Elektronische Vorrichtung (500), umfassend:
mindestens einen Prozessor; und
einen Speicher, der dazu konfiguriert ist, mindestens ein Programm zu speichern;
wobei das mindestens eine Programm, wenn es von dem mindestens einen Prozessor ausgeführt wird, den mindestens einen Prozessor veranlasst, das Arbeitsanzeigeverfahren nach einem der Ansprüche 1 bis 6 durchzuführen.

8. Computerlesbares Speichermedium, das ein Computerprogramm speichert, wobei das Computerprogramm, wenn es von einem Prozessor ausgeführt wird, das Arbeitsanzeigeverfahren nach einem der Ansprüche 1 bis 6 durchführt.

## Revendications

1. Procédé d'affichage d'œuvre, appliqué à un dispositif électronique (500), comprenant :
la réception (S101, 5204) d'une instruction d'affichage, en provenance d'un utilisateur, pour une œuvre cible, dans lequel l'œuvre cible est une œuvre publiée par l'utilisateur ; et
en réponse à l'instruction d'affichage, l'affichage (S102), dans une page d'affichage d'œuvres, de l'œuvre cible et d'informations de navigation de l'œuvre cible ;
dans lequel l'affichage (S102), dans la page d'affichage d'œuvres, des informations de navigation de l'œuvre cible comprend :
le tri (S206) d'informations d'identification d'utilisateur d'utilisateurs de navigation selon une règle prédéfinie pour générer un résultat de tri, dans lequel les utilisateurs de navigation sont des utilisateurs qui parcourent l'œuvre cible ; et
l'affichage (S207), dans une région cible, des informations d'identification d'utilisateur séquentiellement en fonction du résultat de tri, dans lequel la région cible est située dans la page d'affichage d'œuvres, et les informations d'identification d'utilisateur sont situées sur une couche supérieure de l'œuvre cible affichée dans la page d'affichage d'œuvres ; et **caractérisé en ce que** :
le tri des informations d'identification d'utilisateur des utilisateurs de navigation selon la règle prédéfinie comprend : le tri des informations d'identification d'utilisateur des utilisateurs de navigation selon au moins l'un des éléments suivants : un nombre de fois que chaque utilisateur de navigation des utilisateurs de navigation parcourt l'œuvre cible, une durée pendant laquelle chaque utilisateur de navigation des utilisateurs de navigation parcourt l'œuvre cible, ou un nombre de fois que chaque utilisateur de navigation des utilisateurs de navigation interagit avec l'œuvre cible.

2. Procédé selon la revendication 1, dans lequel l'affichage (S207), dans la région cible, des informations d'identification d'utilisateur séquentiellement sur la base du résultat de tri comprend :
l'affichage dynamique, dans la région cible, des informations d'identification d'utilisateur séquentiellement selon une vitesse prédéfinie et une direction prédéfinie en fonction du résultat de tri.

3. Procédé selon la revendication 2, dans lequel chacune des informations d'identification d'utilisateur est affichée à une même vitesse et dans une même direction dans la région cible.

4. Procédé selon l'une quelconque des revendications 1 à 3, dans lequel l'œuvre cible est une vidéo cible publiée par l'utilisateur, et l'affichage, dans la page d'affichage d'œuvres, de l'œuvre cible comprend :
la lecture de la vidéo cible dans la page d'affichage d'œuvres ; ou
l'affichage d'une jaquette de la vidéo cible dans la page d'affichage d'œuvres, et en réponse à la réception d'une opération de clic agissant sur la jaquette, la lecture de la vidéo cible.

5. Procédé selon l'une quelconque des revendications 1 à 3, avant de recevoir l'instruction d'affichage en provenance de l'utilisateur pour l'œuvre cible, comprenant en outre au moins l'un des éléments suivants :
en réponse à la réception d'une première opération de déclenchement en provenance de l'utilisateur agissant sur un message d'interaction de l'œuvre cible, la génération (S201) de l'instruction d'affichage pour l'œuvre cible, dans lequel le message d'interaction est généré sur la base d'une opération d'interaction d'un utilisateur autre que l'utilisateur sur l'œuvre cible ;
en réponse à la réception d'une deuxième opération de déclenchement en provenance de l'utilisateur agissant sur les informations d'œuvre d'une œuvre cible dans une liste d'œuvres, la génération (S202) de l'instruction d'affichage pour l'œuvre cible, dans lequel la liste d'œuvres enregistre des informations d'œuvre de chaque œuvre publiée par l'utilisateur ; ou
en réponse à la réception d'une troisième opération de déclenchement en provenance de l'utilisateur pour passer d'une œuvre affichée dans la page d'affichage d'œuvres à l'œuvre cible, la génération (S203) de l'instruction d'affichage pour l'œuvre cible.

6. Procédé selon l'une quelconque des revendications 1 à 3, avant l'affichage, dans la page d'affichage d'œuvres, de l'œuvre cible et des informations de navigation de l'œuvre cible, comprenant en outre :
l'envoi (S205) d'une demande d'acquisition d'informations de navigation transportant des informations d'identification d'œuvre de l'œuvre cible à un serveur, et la réception des informations de navigation de l'œuvre cible renvoyées par le serveur sur la base de la demande d'acquisition d'informations de navigation.

7. Dispositif électronique (500), comprenant :
au moins un processeur ; et
une mémoire configurée pour stocker au moins un programme ;
dans lequel le au moins un programme, lorsqu'il est exécuté par le au moins un processeur, amène le au moins un processeur à réaliser le procédé d'affichage d'œuvre selon l'une quelconque des revendications 1 à 6.

8. Support de stockage lisible par ordinateur, qui stocke un programme informatique, dans lequel le programme informatique, lorsqu'il est exécuté par un processeur, réalise le procédé d'affichage d'œuvre selon l'une quelconque des revendications 1 à 6.
